# EUROPEAN PATENT SPECIFICATION

(11) **EP 1 366 857 B1**
(45) Date of publication and mention of the grant of the patent: **02.11.2005**
(21) Application number: 03012073.7
(22) Date of filing: 28.05.2003
(51) Int. Cl.: B24B 9/14, B24B 49/00

(54) **Eyeglass lens processing apparatus**
Vorrichtung zum Bearbeiten von Brillengläsern
Dispositif d'usinage de verre de lunettes

(30) Priority: 28.05.2002 JP 2002154555
(43) Date of publication of application: 03.12.2003
(73) Proprietor: Nidek Co., Ltd., Gamagori-shi, Aichi (JP)
(72) Inventor: Kobayashi, Masahiko, Nukata, Aichi (JP); Koike, Shinji, Okazaki, Aichi (JP)
(74) Representative: Schmitz, Hans-Werner

(56) References cited:
- EP-A- 0 857 540
- US-A- 3 452 484
- US-A- 5 347 762

## Description

### BACKGROUND OF THE INVENTION

The present invention relates to an eyeglass lens processing apparatus for processing a periphery (an edge) of an eyeglass lens.

An eyeglass lens processing apparatus in which a periphery of an eyeglass lens is subjected to machining processing based on an outline (which shape is referred to as a "traced outline") obtained by tracing an eyeglass frame and a template is known. The apparatus of this kind includes a lens shape measuring unit which measures an edge position of the lens based on traced outline data. To measure the lens shape, the lens is rotated 360° with a predetermined fixed point on the traced outline (a point at which is fixed a radius vector angle of the traced outline) serving as a starting point for measurement, thereby obtaining edge position data. Then, if there is no deficiency in lens diameter as a result of the measurement of the lens shape, the apparatus processes the periphery of the lens by a grinding wheel based on the traced outline data. Even in case of processing, the predetermined fixed point on the traced outline is set as a starting point for processing.

However, there are the following problems in a method by which the fixed point on the traced outline is set as both the starting point for measurement and the starting point for processing.

In measuring the lens shape, when the traced outline protrudes out of a lens having an unknown diameter, where such protrusion occurs is not determined unless the lens is rotated and measured. Consequently, the determination of a deficiency in lens diameter takes redundant operations and much waiting time.

In processing, in the case that radius vector length at the starting point for processing is small relative to the diameter of a raw lens, i.e., in the case that a processing distance is large, a load will be easily applied to a mechanism section of the apparatus and the lens. A large load applied to the lens easily causes a defect in shape and an axial angle displacement. If control is effected so as to process the lens slowly by avoiding a load, processing time is increased.

EP 0 857 540 A2 discloses a lens grinding apparatus for processing a periphery of an eyeglass lens. The apparatus comprises input means for entering data on the shape of a lens to be processed as well as calculating means which performs different calculations in different zones such that the amount of processing the angular edge portions is determined in correspondence with the radius vector angle of the subject lens.

In view of the aforesaid problems of the conventional apparatus, the technical problem which the invention purposes to solve is to provide an eyeglass lens processing apparatus in which the information on a deficiency in lens diameter can be promptly obtained at the time of measuring a lens shape, and processing can be performed without applying an excessive load to a mechanism section of the apparatus and a lens.

According to the invention, the object is solved by the features of the main claim. The sub-claims contain further preferred developments of the invention.

### BRIEF DESCRIPTION OF THE DRAWINGS

Fig. 1 is a diagram showing an external configuration of an eyeglass lens processing apparatus according to the invention;
Fig. 2 is a perspective view showing an arrangement of a lens processing section disposed in a casing of an apparatus body;
Figs. 3A and 3B are schematic views of a main portion of a carriage section;
Fig. 4 is a view of the carriage section in Fig. 2 as seen in the E direction;
Fig. 5 is a top view of a lens shape measuring section;
Fig. 6 is a left side view of Fig. 5;
Fig. 7 is a view showing a main portion on a right side of a forwardly extending side plate shown in Fig. 5;
Fig. 8 is a sectional view taken along line F-F in Fig. 5;
Figs. 9A and 9B are views illustrating states of left-and-right movement of the lens shape measuring section;
Fig. 10 is a block diagram of a control system of the apparatus;
Fig. 11 is a diagram illustrating a method of changing a starting point for measurement based on radius vector information of a traced outline;
Fig. 12 is a view illustrating a measurement operation effected when a lens diameter is deficient relative to the traced outline; and
Fig. 13 is a diagram illustrating a method of changing a starting point for processing based on the radius vector information of the traced outline.

### DETAILED DESCRIPTION OF PREFERRED EMBODIMENTS

Hereafter, a description will be given of an embodiment of the invention.

### (1) Overall Construction

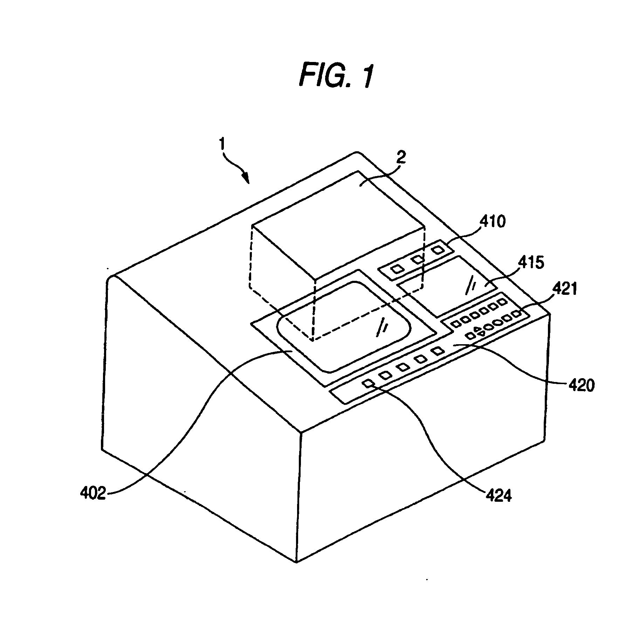

Fig. 1 is a diagram illustrating the external configuration of an eyeglass-lens processing apparatus in accordance with the invention. An eyeglass-frame-shape measuring device 2 is incorporated in an upper right-hand rear portion of a main body 1 of the apparatus. As the frame-shape measuring device 2, ones that disclosed in USP 5,228,242 (corresponding to JP04-93163), USP6, 325, 700 (corresponding to JP2000-314617) and so on, the assignee of which is the same as the present application, can be used. A switch panel section 410 having switches for operating the frame-shape measuring device 2 and a display 415 for displaying processing information and the like are disposed in front of the frame-shape measuring device 2. Further, reference numeral 420 denotes a switch panel section having various switches for inputting processing conditions and the like and for giving instructions for processing, and numeral 402 denotes an openable window for a processing chamber.

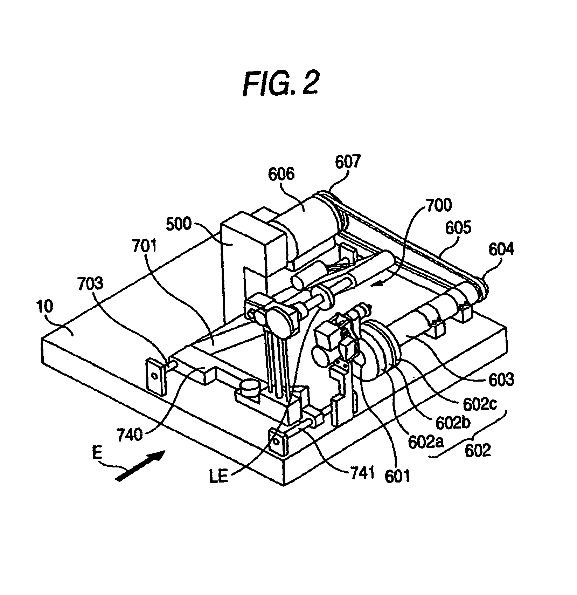

Fig. 2 is a perspective view illustrating the arrangement of a lens processing section disposed in the casing of the main body 1. A carriage section 700 is mounted on a base 10, and a subject lens LE clamped by a pair of lens chuck shafts of a carriage 701 is ground by a group of abrasive wheels (grinding wheels) 602 attached to a rotating shaft 601. The group of abrasive wheels 602 includes a rough abrasive wheel 602a for glass lenses, a rough abrasive wheel 602b for plastic lenses, and a finishing abrasive wheel 602c for beveling processing and flat processing. The rotating shaft 601 is rotatably attached to the base 10 by a spindle 603. A pulley 604 is attached to an end of the rotating shaft 601, and is linked through a belt 605 to a pulley 607 which is attached to a rotating shaft of an abrasive-wheel rotating motor 606. A lens-shape measuring section 500 is disposed in the rear of the carriage 701.

### (2) Construction of Various Sections

### (A) Carriage Section

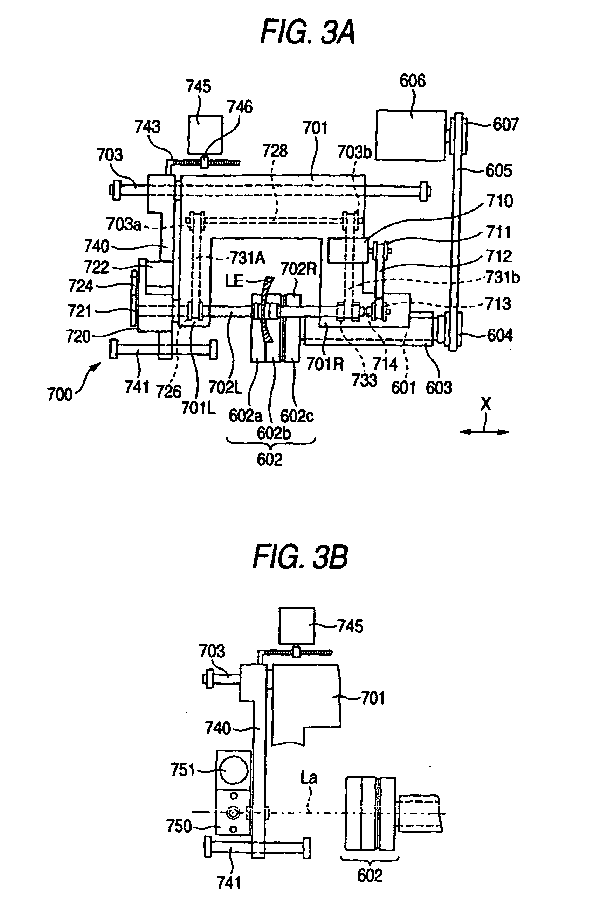

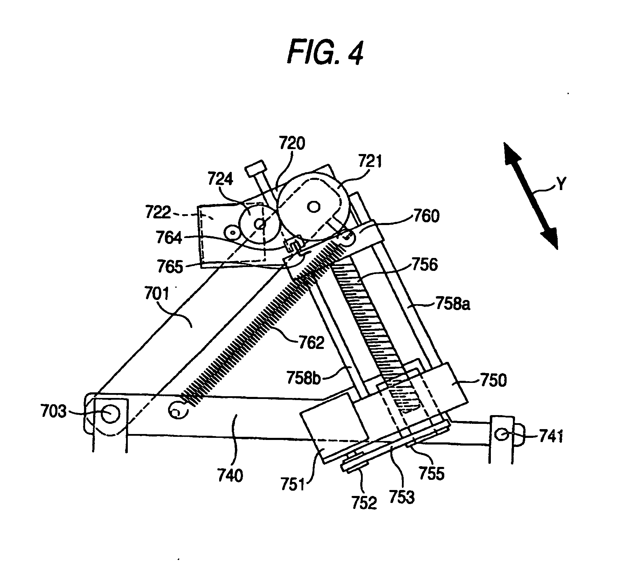

Referring to Figs. 2, 3, and 4, a description will be given of the construction of the carriage section 700. Fig. 3 is a schematic diagram of essential portions of the carriage section 700, and Fig. 4 is a view, taken from the direction of arrow E in Fig. 2, of the carriage section 700.

The carriage 701 is capable of rotating the lens LE while chucking it with two lens chuck shafts (lens rotating shafts) 702L and 702R, and is rotatably slidable with respect to a carriage shaft 703 that is fixed to the base 10 and that extends inparallel to the rotating shaft 601. Hereafter, a description will be given of a lens chuck mechanism and a lens rotating mechanism as well as an X-axis moving mechanism and a Y-axis moving mechanism of the carriage 701 by assuming that the direction in which the carriage 701 is moved in parallel to the rotating shaft 601 is the X axis, and the direction for changing the axis-to-axis distance between the chuck shafts (702L, 702R) and the rotating shaft 601 by the rotation of the carriage 701 is the Y axis.

### <Lens Chuck Mechanism and Lens Rotating Mechanism>

The chuck shaft 702L and the chuck shaft 702R are rotatably held coaxially by a left arm 701L and a right arm 701R, respectively, of the carriage 701. A chucking motor 710 is fixed to the center of the upper surface of the right arm 701R, and the rotation of a pulley 711 attached to a rotating shaft of the motor 710 rotates a feed screw 713, which is rotatably held inside the right arm 701R, by means of a belt 712. A feed nut 714 is moved in the axial direction by the rotation of the feed screw 713. As a result, the chuck shaft 702R connected to the feed nut 714 can be moved in the axial direction, so that the lens LE is clamped by the chuck shafts 702L and 702R.

A rotatable block 720 for attaching a motor, which is rotatable about the axis of the chuck shaft 702L, is attached to a left-side end portion of the left arm 701L, and the chuck shaft 702L is passed through the block 720, a gear 721 being secured to the left end of the chuck shaft 702L. A pulse motor 722 for lens rotation is fixed to the block 720, and as the motor 722 rotates the gear 721 through a gear 724, the rotation of the motor 722 is transmitted to the chuck shaft 702L. A pulley 726 is attached to the chuck shaft 702L inside the left arm 701L. The pulley 726 is linked by means of a timing belt 731a to a pulley 703a secured to a left end of a rotating shaft 728, which is held rotatably in the rear of the carriage 701. Further, a pulley 703b secured to a right end of the rotating shaft 728 is linked by means of a timing belt 731b to a pulley 733 which is attached to the chuck shaft 702R in such a manner as to be slidable in the axial direction of the chuck shaft 702R inside the right arm 701R. By virtue of this arrangement, the chuck shaft 702L and the chuck shaft 702R are rotated synchronously.

### <X-axis Moving Mechanism and Y-axis Moving Mechanism of Carriage>

The carriage shaft 703 is provided with a movable arm 740 which is slidable in its axial direction so that the arm 740 is movable in the X-axis direction (in the axial direction of the shaft 703) together with the carriage 701. Further, the arm 740 at its front portion is slidable on and along a guide shaft 741 that is secured to the base 10 in a parallel positional relation to the shaft 703. A rack 743 extending in parallel to the shaft 703 is attached to a rear portion of the arm 740, and this rack 743 meshes with a pinion 746 attached to a rotating shaft of a motor 745 for moving the carriage 701 in the X-axis direction, the motor 745 being secured to the base 10. By virtue of the above-described arrangement, the motor 745 is able to move the carriage 701 together with the arm 740 in the axial direction of the shaft 703 (in the X-axis direction).

As shown in Fig. 3B, a swingable block 750 is attached to the arm 740 in such a manner as to be rotatable about the axis La which is in alignment with the rotational center of the abrasive wheels 602 (the rotating shaft 601). The distance from the center of the shaft 703 to the axis La and the distance from the center of the shaft 703 to the rotational center of the chuck shafts (702L, 702R) are set to be identical. A motor 751 for moving the carriage 701 in the Y-axis direction is attached to the block 750, and the rotation of the motor 751 is transmitted by means of a pulley 752 and a belt 753 to a female screw 755 held rotatably in the block 750. A feed screw 756 is inserted in a threaded portion of the female screw 755 in mesh therewith, and the feed screw 756 is moved vertically by the rotation of the female screw 755.

A guide block 760 which abuts against a lower end surface of the block 720 is fixed to an upper end of the feed screw 756, and the guide block 760 moves along two guide shafts 758a and 758b implanted on the block 750. Accordingly, as the guide block 760 is vertically moved together with the feed screw 756 by the rotation of the motor 751, it is possible to change the vertical position of the block 720 abutting against the guide block 760. As a result, the vertical position of the carriage 701 attached to the block 720 can be also changed (namely, the carriage 701 rotates about the shaft 703 to change the axis-to-axis distance between the chuck shafts (702L, 702R) and the rotating shaft 601) . A spring 762 is stretched between the left arm 701L and the arm 740, so that the carriage 701 is constantly urged downward to impart processing pressure onto the lens LE. Although the downward urging force acts on the carriage 701, the downward movement of the carriage 701 is restricted such that the carriage 701 can only be lowered down to the position in which the block 720 abuts against the guide block 760. A sensor 764 for detecting an end of processing is attached to the block 720, and the sensor 764 detects the end of processing (ground state) by detecting the position of a sensor plate 765 attached to the guide block 760.

### (B) Lens-Shape Measuring Section

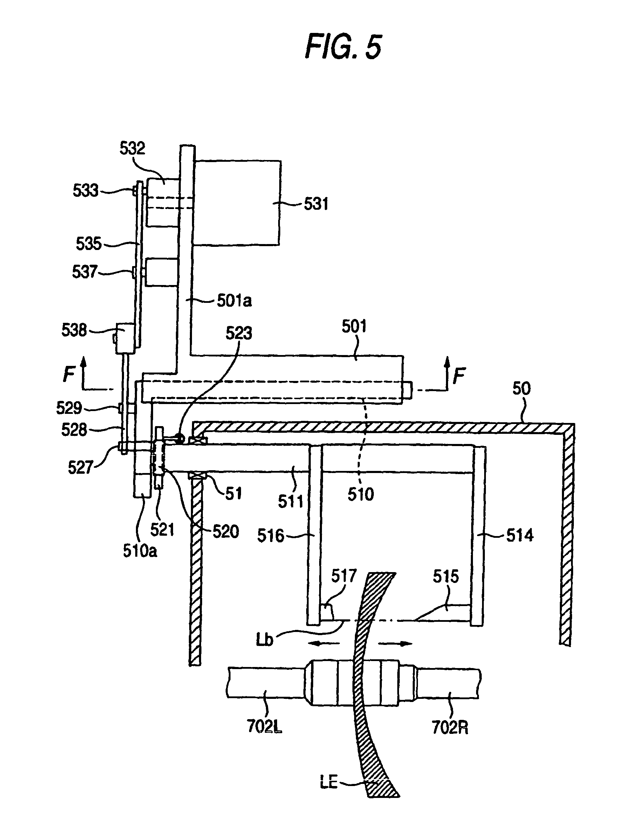

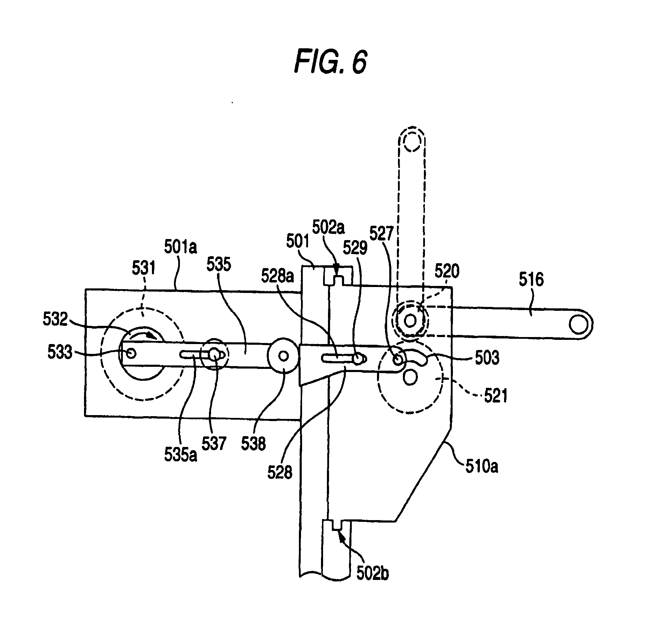

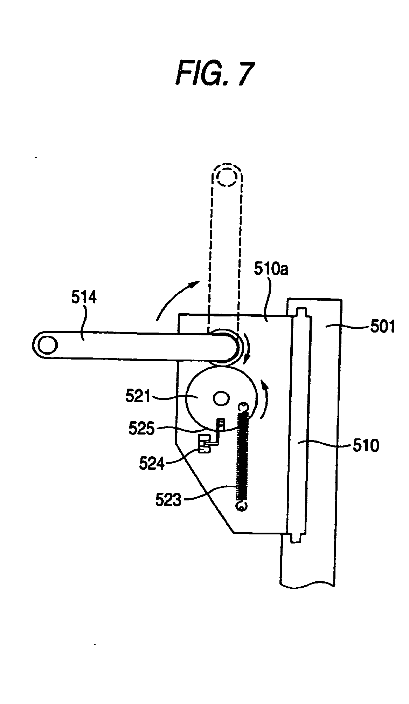

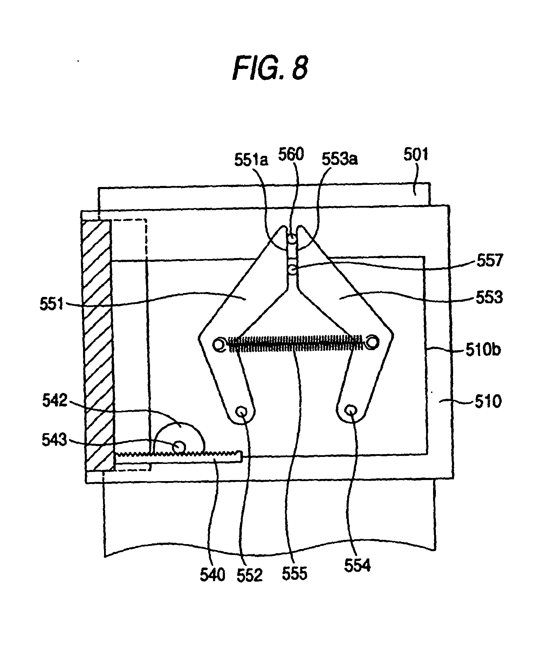

Referring to Figs. 5 to 8, a description will be given of the construction of the lens-shape measuring section 500. Fig. 5 is a top view of the lens-shape measuring section, Fig. 6 is a left side elevational view of Fig. 5, and Fig. 7 is a view illustrating essential portions of a right side of a forwardly extending side plate shown in Fig. 5. Fig. 8 is a cross-sectional view taken along line F - F in Fig. 5.

A supporting block 501 is provided uprightly on the base 10. A sliding base 510 is held on the supporting block 501 in such a manner as to be slidable in the left-and-right direction (in a direction parallel to the chuck shafts 702L and 702R) by means of a pair of upper and lower guide rail portions 502a and 502b juxtaposed vertically. A forwardly extending side plate 510a is formed integrally at a left end of the sliding base 510, and a shaft 511 having a parallel positional relation to the chuck shafts 702L and 702R is rotatably attached to the side plate 510a. A feeler arm 514 having a feeler 515 for measuring the lens rear surface is secured to a right end portion of the shaft 511, while a feeler arm 516 having a feeler 517 for measuring the lens front surface is secured to the shaft 511 at a position close to its center. Both the feeler 515 and the feeler 517 have a hollow cylindrical shape, a distal end portion of each of the feelers is obliquely cut as shown in Fig. 5, and the obliquely cut tip comes into contact with the rear surface or front surface of the lens LE. Contact points of the feeler 515 and the feeler 517 are opposed to each other, and the interval therebetween is arranged to be constant. Incidentally, the axis Lb connecting the contact point of the feeler 515 and the contact point of the feeler 517 is in a predetermined parallel positional relation to the axis of the chuck shafts (702L, 702R) in the state of measurement shown in Fig. 5.

A small gear 520 is fixed to a proximal portion of the shaft 511, and a large gear 521 which is rotatably provided on the side plate 510a is in mesh with the small gear 520. A spring 523 is stretched between the large gear 521 and a lower portion of the side plate 510a, so that the large gear 521 is constantly pulled in the direction of rotating clockwise in Fig. 7 by the spring 523. Namely, the arms 514 and 516 are urged so as to rotate downward by means of the small gear 520.

A slot 503 is formed in the side plate 510a, and a pin 527 which is eccentrically secured to the large gear 521 is passed through the slot 503. A first moving plate 528 for rotating the large gear 521 is attached to the pin 527. An elongated hole 528a is formed substantially in the center of the first moving plate 528, and a fixed pin 529 secured to the side plate 510a is engaged in the elongated hole 528a.

Further, a motor 531 for arm rotation is attached to a rear plate 501a extending in the rear of the supporting block 501, and an eccentric pin 533 at a position eccentric from a rotating shaft of the motor 531 is attached to a rotating member 532 provided on a rotating shaft of the motor 531. A second moving plate 535 for moving the first moving plate 528 in the back-and-forth direction (in the left-and-right direction in Fig. 6) is attached to the eccentric pin 533. An elongated hole 535a is formed substantially in the center of the second moving plate 535, and a fixed pin 537 which is fixed to the rear plate 501a is engaged in the elongated hole 535a. A roller 538 is rotatably attached to an end portion of the second moving plate 535.

When the eccentric pin 533 is rotated clockwise from the state shown in Fig. 6 by the rotation of the motor 531, the second moving plate 535 moves forward (rightward in Fig. 6) by being guided by the fixed pin 537 and the elongated hole 535a. Since the roller 538 abuts against the end face of the first moving plate 528, the roller 538 moves the first moving plate 528 in the forward direction as well owing to the movement of the second moving plate 535. As a result of this movement, the first moving plate 528 rotates the large gear 521 by means of the pin 527. The rotation of the large gear 521, in turn, causes the feeler arms 514 and 516 attached to the shaft 511 to retreat to an upright state. The driving by the motor 531 to this retreated position is determined as an unillustrated micro switch detects the rotated position of the rotating member 532.

If the motor 531 is reversely rotated, the second moving plate 535 is pulled back, the large gear 521 is rotated by being pulled by the spring 523, and the feeler arms 514 and 516 are inclined toward the front side. The rotation of the large gear 521 is limited as the pin 527 comes into contact with an end surface of the slot 503 formed in the side plate 510a, thereby determining the measurement positions of the feeler arms 514 and 516. The rotation of the feeler arms 514 and 516 up to this measurement positions is detected as the position of a sensor plate 525 attached to the large gear 521 is detected by a sensor 524 attached to the side plate 510a, as shown in Fig. 7.

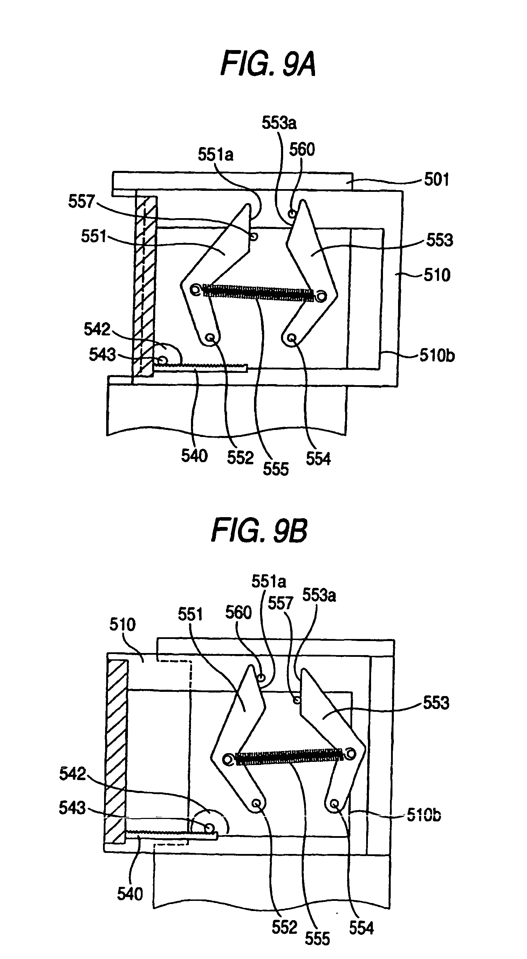

Referring to Figs. 8 and 9, a description will be given of a left-and-right moving mechanism of the sliding base 510 (feeler arms 514, 515). Fig. 9 is a diagram illustrating the state of left-and-right movement.

An opening 510b is formed in the sliding base 510, and a rack 540 is provided at a lower end of the opening 510b. The rack 540 meshes with a pinion 543 of an encoder 542 fixed to the supporting block 501, and the encoder 542 detects the direction of the left-and-right movement and the amount of movement of the sliding base 510. A chevron-shaped driving plate 551 and an inverse chevron-shaped driving plate 553 are attached to a wall surface of the supporting block 501, which is exposed through the opening 510b in the sliding base 510, in such a manner as to be rotatable about a shaft 552 and a shaft 554, respectively. A spring 555 having urging forces in the directions in which the driving plate 551 and the driving plate 553 approach each other is stretched between the two driving plates 551 and 553. Further, a limiting pin 557 is embedded in the wall surface of the supporting block 501, and when an external force is not acting upon the sliding base 510, both an upper end face 551a of the driving plate 551 and an upper end face 553a of the driving plate 553 are in a state of abutting against the limiting pin 557, and this limiting pin 557 serves as an origin of the left- and rightward movement.

Meanwhile, a guide pin 560 is secured to an upper portion of the sliding base 510 at a position between the upper end face 551a of the driving plate 551 and the upper end face 553a of the driving plate 553. When a rightwardly moving force acts upon the sliding base 510, as shown in Fig. 9A, the guide pin 560 abuts against the upper end face 553a of the driving plate 553, causing the driving plate 553 to be tilted rightward. At this time, since the driving plate 551 is fixed by the limiting pin 557, the sliding base 510 is urged in the direction of being returned to the origin of left- and rightward movement (in the leftward direction) by the spring 555. On the other hand, when a leftwardly moving force acts upon the sliding base 510, as shown in Fig. 9B, the guide pin 560 abuts against the upper end face 551a of the driving plate 551, and the driving plate 551 is tilted leftward, but the driving plate 553 is fixed by the limiting pin 557. Accordingly, the sliding base 510 this time is urged in the direction of being returned to the origin of left- and rightward movement (in- the rightward direction) by the spring 555. From such movement of the sliding base 510, the amount of movement of the feeler 515 in contact with the lens rear surface and the feeler 517 in contact with the lens front surface (the amount of axial movement of the chuck shafts 702 and 702R) is detected by a single encoder 542.

It should be noted that, in Fig. 5, reference numeral 50 denotes a waterproof cover, and only the shaft 511, the feeler arms 514 and 516, and the feelers 515 and 517 are exposed in the waterproof cover 50. Numeral 51 denotes a sealant for sealing the gap between the waterproof cover 50 and the shaft 511.

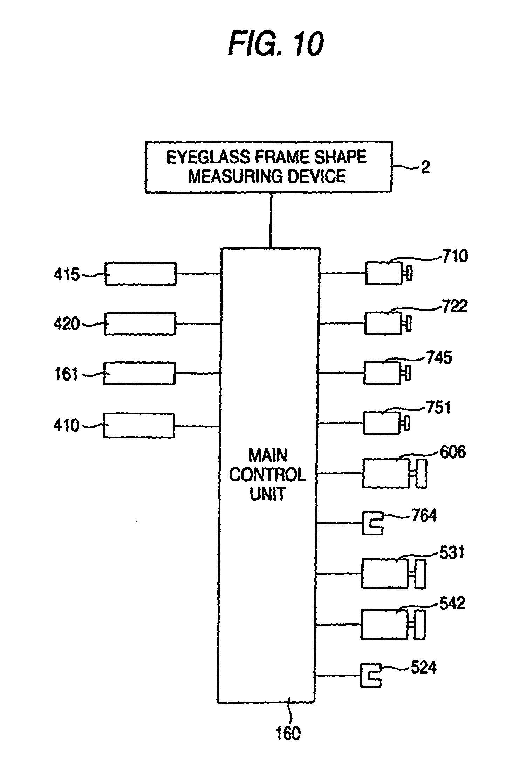

Next, referring to the control block diagram shown in Fig. 10, a description will be given of the operation of the apparatus having the above-described construction. Here, a description will be given of the case in which the lens LE is a plastic single focal lens.

The shape of an eyeglass frame (or template) for fitting the lens LE is measured by the measuring device 2, and the obtained traced outline data is inputted to a data memory 161 by pressing a switch 421. The target lens shape (traced outline shape) based on the obtained data (traced outline data) is graphically displayed on the display 415, under which condition the processing conditions can be inputted. By operating switches on the switch panel section 410, the operator inputs necessary layout data such as the PD (papillary distance) of the wearer, the height of the optical center of the lens LE with respect to the center of the traced outline, and the like. Hereby, the layout of the traced outline with respect to the optical center of the lens LE is determined. Further, the operator inputs the material (plastic in the embodiment) of the lens LE to be processed and the processing mode (flat processing mode in the embodiment). Incidentally, the traced outline data and the layout data may be input through the separate device by means of communication data.

Upon completion of the necessary entry, the lens LE is chucked by the chuck shaft 702L and the chuck shaft 702R. After the lens LE is completely chucked, the start switch 424 is pressed to operate the apparatus. On the basis of the inputted traced outline shape data and layout data, a main control unit 160 obtains radius vector information (Rn, θn) (n = 1, 2, ..., N) with the chuck center as a reference, determines processing information from positional information on a contact point where the radius vector of the traced outline vector abuts against the abrasive wheel surface (refer to Re. 35, 898 (USP5, 347, 762)), and stores it in the memory 161.

Subsequently, the main control unit 160 executes the lens shape measurement by using the lens-shape measuring section 500 in accordance with a processing sequence program. The main control unit 160 drives the motor 531 to rotate the shaft 511, causing the feeler arms 514 and 516 to be positioned to the measuring position from the retreated position. The main control unit 160 causes the chucked lens LE to be located between the feeler 515 and the feeler 517, as shown in Fig. 5. At this time, based on the radius vector information (Rn, θn), the main control unit 160 moves the carriage 701 vertically and rotates the chuck shafts 702L and 702R (the lens LE), and a point at which radius vector length Rn in the radius vector information (Rn, θn) reaches its maximum is thus positioned on the axis Lb, serving as a starting point for measurement.

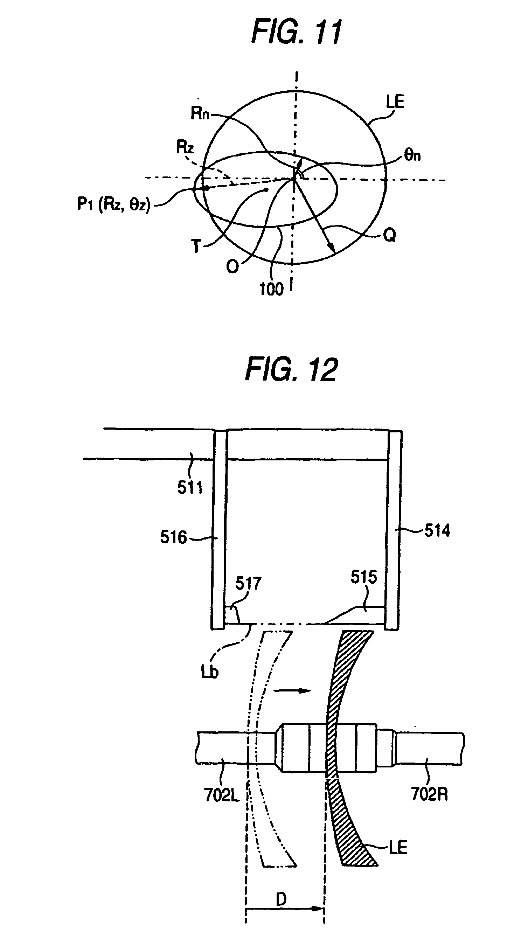

Fig. 11 is a diagram illustrating a method of changing the starting point for measurement based on the radius vector information of the traced outline. Fig. 11 shows a case in which an optical center O of the lens LE is conformed to the chuck center (the processing center). A traced outline 100 is represented by the radius vector information (Rn, θn) with the chuck center i.e. the optical center O of the lens LE serving as reference point (as an origin of coordinates). Assuming that the lens LE is formed with the length of a radius Q. If a maximum value Rz of the radius vector length Rn is larger than the lens radius length Q, it follows that the traced outline protrudes out of a lens diameter and hence the lens LE cannot be processed. A point at this maximum value Rz of the radius vector length Rn is a place that becomes deficient in lens diameter most easily. Accordingly, if a point P1 at the maximum radius vector length Rz is set as the starting point for measurement, the deficiency in lens diameter can be determined immediately after beginning to measure, and unnecessary measurements can be avoided. The point P1 is represented by the radius vector length Rz and a radius vector angle θz.

The description will be given of a measurement operation executed when the lens diameter is deficient with respect to the traced outline. To, as the starting point for measurement, the point P1 (Rz, θz) at which the radius vector length Rn reaches its maximum, the main control unit 160 vertically moves the carriage 701 (the lens LE) based on the maximum radius vector length Rz and rotates the chuck shafts 702l and 702R (the lens LE) based on the radius vector angle θz, thus causing the point P1 to be positioned on the axis Lb. Thereafter, as shown in Fig. 12, the carriage 701 (the lens LE) is moved by a predetermined amount D toward the feeler 515 by the driving of the motor 745. An initial measurement position of the lens LE on the feeler 515 side lies substantially in the middle of the right-side movement range of the sliding base 510. If the lens diameter is sufficient, the rear surface of the lens LE abuts against the feeler 515, and the feeler 515 and the sliding base 510 move toward the right in the drawing. On the other hand, if the lens diameter is not sufficient, the feeler 515 and the sliding base 510 do not move toward the right in the drawing. The main control unit 160 is notified at this time that the feeler 515 is not moved, that is, an output signal of the encoder 542 is not changed, thereby determining the deficiency in lens diameter. If there is a deficiency in lens diameter, an error message to that effect will be displayed on the display 415. Thereby, the operator can be aware of the deficiency in lens diameter immediately after beginning to measure the lens shape and hence can promptly take a measure, for example, to change the lens diameter.

Further, when a traced outline center (the geometrical center of a traced outline) T is conformed to the chuck center (the processing center), the following can be done. That is, since the positional relation between the traced outline center T and the optical center O is known from the input of layout data, the radius vector information with the traced outline center T as reference is converted to the radius vector information with the optical center O as reference, and radius vector length in the converted radius vector information can be used.

Incidentally, the radius vector length used in determining the starting point for measurement is not limited to the one with the optical center O of the lens LE as reference. The radius vector length with the traced outline center T as reference may be used for simplicity. Otherwise, when the chuck center differs from the optical center or the traced outline center, the radius vector length with the chuck center as reference may be used. The chuck center determined by attaching a processing jig such as a suction cup may take up an arbitrary position as long as the positional relation of the chuck center to the traced outline center is inputted as layout data in advance. The radius vector information with the chuck center as reference can be used when the lens LE is a bifocal lens or a progressive multifocal lens.

In a normal traced outline, a point at the maximum radius vector length with the traced outline center or the chuck center as reference also exists relatively close to a point at the maximum radius vector length with the optical center (the diametrical center of a circular lens) as reference. Accordingly, a deficiency in the lens diameter can be quickly detected even using the radius vector information with the traced outline center or the chuck center as reference. Even when the lens diameter is not deficient at the starting point for measurement, while the vicinity thereof is being measured, a deficiency in the lens diameter can be detected. When the lens diameter is found to be deficient in the process of the measurement of the lens shape, the feeler 515 falls out of the rear surface of the lens LE, and the output signal of the encoder 542 shows a sharp change, whereby the deficiency in the lens diameter can be detected.

Further, the starting point for measurement is preferably the point at the maximum radius vector length. However, the starting point for measurement may use an adjacent point that deviates at a predetermined angle with the point at the maximum radius vector length serving as an initial position. When there are a plurality of points at the maximum radius vector lengths in the case that the traced outline center and the chuck center are used as references, the starting point for measurement may be determined by the positional relation of layout, such as by taking a point that is the farther from the optical center.

When the lens diameter is sufficient relative to the traced outline, the lens LE shape is measured in the following manner. The main control unit 160 moves the carriage 701 by a predetermined amount D toward the feeler 515 by the driving of the motor 745. If the lens diameter is sufficient at the starting point for measurement, the feeler 515 abuts against the rear surface (the rear refractive surface) of the lens LE. Since the initial measurement position of the lens LE on the feeler 515 side lies substantially in the middle of the right-side movement range of the sliding base 510, a force is constantly applied to the feeler 515 by the spring 555 such that the feeler 515 abuts against the rear surface.

In the state where the feeler 515 is abutted against the rear surface of the lens LE, the chuck shafts 702L and 702R (the lens LE) are rotated by the motor 722, and also the motor 751 is driven to vertically move the carriage 701 (the lens LE) based on the radius vector information. As the lens LE is thus rotated and moved, the feeler 515 is horizontally moved along the rear surface shape of the lens LE. This amount of movement is detected by the encoder 542. Thus, the lens LE is rotated through one revolution, thereby measuring the rear surface shape (the edge position) of the lens LE to be expected after finishing processing.

Subsequently, the front surface (the front refractive surface) of the lens LE is measured. The main control unit 160 moves the carriage 701 in the left direction and causes the feeler 517 to abut against the front surface of the lens LE, thus switching the measuring surface. The initial measurement position for measuring the front surface side also lies substantially in the middle of the left-side movement range of the sliding base 510, and a force is constantly applied to the feeler 517 such that the feeler 517 abuts against the front surface of the lens LE. Then, the front surface shape (the edge position) of the lens LE to be expected after finishing processing is measured by the amount of movement of the feeler 517 by the rotation and movement of the lens LE based on the radius vector information. Once the rear and front surface shapes of the lens LE are obtained, edge thickness information can be obtained from both shapes. After the measurement of the lens shape is completed, the main control unit 510 drives the motor 531 to retreat the feeler arms 514 and 516.

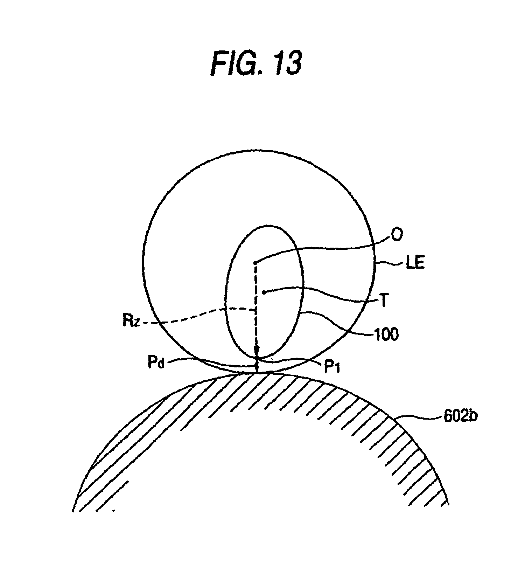

Upon completion of the measurement of the lens LE shape, the main control unit 160 processes the lens LE in accordance with the input data of processing conditions. The main control unit 160 moves the carriage 701 (the lens LE) by the motor 745 such that the lens LE comes into contact with the rough abrasive wheel 602b. Thereafter, based on the processing information, the main control unit 160 moves the carriage 701 (the lens LE) vertically to perform rough processing. Even during this processing, as shown in Fig. 13, the lens LE is rotated such that the point P1 at the maximum radius vector length Rz (in Fig. 13, the optical center O is conformed to the chuck center and the optical center O is used as reference) of the traced outline 100 becomes a starting point for processing. Thereafter, the carriage 701 is lowered by the driving of the motor 751, and the periphery of the lens LE is moved toward Lhe rough abrasive wheel 602b. This reduces a processing distance Pd up to the starting point P1 for processing with respect to the lens LE diameter, so that only a low load on the processing mechanism section of the apparatus and the lens LE will be sufficient enough.

Periphery processing of an eyeglass lens frequently adopts a method by which the lens LE is ground down to any one point on the traced outline and thereafter the lens is processed while being rotated until all points (the entire periphery) of the traced outline have been ground off. There is also a method of grinding the lens LE gradually while rotating it from the beginning. However, the former generally has an advantage that processing time can be reduced. If a predetermined fixed point is always set as the starting point for processing, a relatively great processing distance need be processed at one time depending upon the traced outline. This portion will then be ground as if a shape corresponding to the rough abrasive wheel 602b diameter cut into the circular lens LE. If the lens LE is rotated thereafter, a heavy load will be placed on the chuck shafts 702L and 702R and the lens LE at this time. Such a load causes the axial angle displacement of a processed lens and the deterioration in accuracy of a shape into which the lens is processed.

In contrast, the point P1 at the maximum radius vector length Rz is set as the starting point for processing, whereby the processing distance Pd can be reduced. Therefore, the load applied to the mechanism section of the apparatus and the lens LE can be reduced without impairing processing speed. After the lens LE is ground down to the point P1 to thereby provide the starting point for processing the carriage 701 is vertically moved based on processing correction information, while the lens LE is being rotated, thereby completing rough processing. Next, the lens LE is moved to a flat portion of the finishing abrasive wheel 602c, and the carriage 701 is similarlyvertically moved to perform finishing processing.

The aforesaid determination of the starting point for processing can also adopt the same way of determination as that of the starting point for measurement, such as using the traced outline center and the chuck center as references in addition to the maximum radius vector length with the optical center as reference. Also, although an example of using an abrasive wheel as a grinding tool has been described above, the invention can be similarly applied even to a processing apparatus using a grinding tool such as a cutter.

As described above, according to the invention, the information on the deficiency in lens diameter can be promptly obtained at the time of measuring the lens shape. Also, processing can be performed without applying an excessive load to the mechanism section of the apparatus and the lens during the processing.

## Claims

1. An eyeglass-lens processing apparatus for processing a periphery of an eyeglass-lens (LE), comprising:
lens chuck shafts (702L, 702R) adapted to chuck and rotate the lens;
input means (2, 410, 420) adapted to input data on a traced outline of an eyeglass frame or a template for fitting the lens and data on layout of the lens with respect to the traced outline;
computing means (160) adapted to compute radius vector information with a predetermined position as reference based on the data inputted by the input means;
measuring means (500, 700) adapted to measure an edge position of at least one of a front surface and a rear surface of the lens; and
measurement control means (160) adapted to control the measuring means to measure the edge position based on the radius vector information,
**characterized in that**
the measurement control means are adapted to change a measurement starting point of the measuring means based on a point (P1) of a maximum radius vector length (Rz) of the radius vector information.

2. The eyeglass-lens processing apparatus according to claim 1,
wherein the computing means are adapted to compute the radius vector information with a chuck center position of the chuck shafts as the reference.

3. The eyeglass-lens processing apparatus according to claim 1 or 2, wherein the computing means are adapted to compute the radius vector information with one of an optical center position of the lens and a geometrical center position of the traced outline as the reference.

4. The eyeglass-lens processing apparatus according to any one of claims 1 to 3 further comprising:
determining means (160) adapted to determine deficiency in a diameter of the lens based on a measurement result by the measuring means; and
display means (415) adapted to display the deficiency in the lens diameter.

5. The eyeglass-lens processing apparatus according to any one of claims 1 to 4 further comprising:
a processing tool (602) adapted to process the periphery of the lens; and
processing control means (160) adapted to control rotation of the chuck shafts and relative movement of the chuck shaft with respect to the processing tool and to change a processing starting point between the lens and the processing tool based on the maximum radius vector length point.

## Patentansprüche

1. Brillenlinsen-Bearbeitungsvorrichtung zum Bearbeiten eines Umfangs einer Brillenlinse (LE) mit:
Linsen-Einspannwellen (702L, 702R) zum Einspannen und Drehen der Linse;
einer Eingabevorrichtung (2, 410, 420) zur Dateneingabe eines nachverfolgten Umrisses eines Brillenrahmens oder einer Schablone zum Einpassen der Linse und Daten eines Layouts der Linse bezüglich des nachverfolgten Umrisses;
einer Rechenvorrichtung (160) zum Berechnen einer Radiusvektorinformation mit einer vorbestimmten Position als Referenz auf der Basis der durch die Eingabevorrichtung eingegebenen Daten;
einer Messvorrichtung (500, 700) zum Messen einer Kantenposition von mindestens einer Vorderfläche und/oder einer Rückfläche der Linse; und
einer Messsteuerungsvorrichtung (160) zum Steuern/Regeln der Messvorrichtung, um die Kantenposition auf der Basis der Radiusvektorinformation zu messen;
**dadurch gekennzeichnet, dass**
die Messsteuerungsvorrichtung zum Ändern eines Messstartpunktes der Messvorrichtung auf der Basis eines Punktes (P1) einer maximalen Radiusvektorlänge (Rz) der Radiusvektorinformation ausgelegt ist.

2. Brillenlinsen-Bearbeitungsvorrichtung gemäß Anspruch 1, **dadurch gekennzeichnet, dass** die Rechenvorrichtung die Radiusvektorinformation mit einer Einspann-Mittelposition der Einspannwellen als Referenz berechnet.

3. Brillenlinsen-Bearbeitungsvorrichtung gemäß Anspruch 1 oder 2, **dadurch gekennzeichnet, dass** die Rechenvorrichtung die Radiusvektorinformation mit entweder einer optischen Mittelposition der Linse oder einer geometrischen Mittelposition des nachverfolgten Umrisses als Referenz berechnet.

4. Brillenlinsen-Bearbeitungsvorrichtung gemäß einem der Ansprüche 1 bis 3, die ferner folgendes aufweist:
eine Bestimmungsvorrichtung (160) zum Bestimmen eines Fehlers im Durchmesser der Linse auf der Basis eines Messergebnisses durch die Messvorrichtung; und
eine Anzeigevorrichtung (415) zum Anzeigen des Fehlers im Linsendurchmesser.

5. Brillenlinsen-Bearbeitungsvorrichtung gemäß einem der Ansprüche 1 bis 4, die ferner folgendes aufweist:
ein Bearbeitungswerkzeug (602) zum Bearbeiten des Umfangs der Linse; und
eine Bearbeitungssteuervorrichtung (160) zum Steuern der Drehung der Linsenwellen und der Relativbewegung der Linsenwellen bezüglich des Bearbeitungswerkzeuges und zum Ändern eines Bearbeitungsstartpunktes zwischen den Linsen und dem Bearbeitungswerkzeug auf der Basis des maximalen Radiusvektorlängenpunktes.

## Revendications

1. Appareil d'usinage de verres de lunettes pour usiner une périphérie d'un verre de lunettes (LE), comprenant :
des arbres-mandrins de verre (702L, 702R) adaptés à mandriner et à faire tourner le verre ;
des moyens de saisie (2, 410, 420) adaptés à saisir des données sur un contour tracé d'un cadre ou d'un gabarit de verre pour monter le verre, et des données sur le motif du verre par rapport au contour tracé ;
des moyens de calcul (160) adaptés à calculer les informations vectorielles en rayon avec une position prédéterminée à titre de référence, en se basant sur les données saisies par les moyens de saisie ; des moyens de mesure (500, 700) adaptés à mesurer une position de bordure de l'une au moins parmi une surface frontale et une surface postérieure du verre ; et
des moyens de commande de mesure (160) adaptés à commander les moyens de mesure pour mesurer la position de la bordure en se basant sur les informations vectorielles en rayon,
**caractérisé en ce que**
les moyens de commande de mesure sont adaptés à changer un point de départ de mesure des moyens de mesure en se basant sur un point (P1) auquel les informations vectorielles en rayon présentent une longueur de vecteur radial maximum (Rz).

2. Appareil d'usinage de verres de lunettes selon la revendication 1,
dans lequel les moyens de calcul sont adaptés à calculer les informations vectorielles en rayon avec une position centrale de mandrinage des arbres-mandrins à titre de référence.

3. Appareil d'usinage de verres de lunettes selon la revendication 1 ou 2, dans lequel les moyens de calcul sont adaptés à calculer les informations vectorielles en rayon en utilisant à titre de référence une position parmi une position du centre optique de la lentille et une position du centre géométrique du contour tracé.

4. Appareil d'usinage de verres de lunettes selon l'une quelconque des revendications 1 à 3, comprenant en outre :
des moyens de détermination (160) adaptés à déterminer un déficit en diamètre du verre en se basant sur un résultat de mesure par les moyens de mesure ; et
des moyens d'affichage (45) adaptés à afficher le déficit dans le diamètre du verre.

5. Appareil d'usinage de verres de lunettes selon l'une quelconque des revendications 1 à 4, comprenant en outre :
un outil d'usinage (602) adapté à usiner la périphérie du verre ; et
des moyens de commande d'usinage (160) adaptés à commander la rotation des arbres-mandrins et le mouvement relatif des arbres-mandrins par rapport à l'outil d'usinage, et à changer un point de départ d'usinage entre le verre et l'outil d'usinage en se basant sur le point à longueur maximum du vecteur radial.
